# EUROPEAN PATENT SPECIFICATION

(11) **EP 3 626 049 B1**
(45) Date of publication and mention of the grant of the patent: **03.11.2021**
(21) Application number: 18805787.1
(22) Date of filing: 26.02.2018
(51) Int. Cl.: A01G 17/04, A01G 23/04, A01G 13/02, E02D 17/20

(54) **TREEFALL PREVENTION TOOL AND TREEFALL PREVENTION METHOD**
BAUMFALLVERHINDERUNGSWERKZEUG UND BAUMFALLVERHINDERUNGSVERFAHREN
OUTIL DE PRÉVENTION DE LA CHUTE D'ARBRE ET PROCÉDÉ DE PRÉVENTION DE LA CHUTE D'ARBRE

(30) Priority: 26.05.2017 JP 2017104042
(43) Date of publication of application: 25.03.2020
(73) Proprietor: Yamagata Kaihatsu Kogyo Co.,Ltd., Kishiwada-shi, Osaka 596-0805 (JP); Green Elm Co.,Ltd., Oita 879-1506 (JP)
(72) Inventor: YAMAGATA, Ryuzo, Kishiwada-shi, Osaka 596-0805 (JP); NISHINO, Fumitaka, Oita 879-1506 (JP)
(74) Representative: Isarpatent
(86) International application number: PCT/JP2018/006842
(87) International publication number: WO 2018/216286

(56) References cited:
- CA-A- 1 061 564
- JP-A- H09 327 239
- JP-A- 2014 068 615
- JP-B2- 3 862 606
- KR-B1- 101 066 624
- US-A1- 2008 063 935
- US-A1- 2013 139 433
- US-A1- 2014 305 041
- US-A1- 2016 295 812

## Description

### Technical Field

The present invention relates to a treefall preventing device and a treefall preventing method, and more specifically a treefall preventing device to be buried in soil such that roots entwine the device as a planted tree grows and a treefall preventing method involving the device.

### Background Art

To date, a tree supporting device that is buried in soil and supports the root ball of a tree is known. For example, Patent Literature 1 discloses a tree supporting device comprising a base disposed in the bottom part of a burying hole for planting a root ball of a tree and wires for securing the root ball to the base by being wound around the root ball.

### Citation List

### Patent Literature

Patent Literature 1: JP 2000-245273A
Patent Literature 2: JP 3 862606 B2
Patent Literature 3: US 2014/305041 A1
Patent Literature 4: CA 1 061564 A
Patent Literature 5: KR 101 066 624 B1

### Summary of Invention

### Technical Problem

However, with the conventional tree supporting device, there is a concern that as roots grow and spread toward the surrounding soil after a tree is planted, the wires holding the root ball become loose, resulting in insufficient support for the tree. Thus, when the planted tree does not have sufficient rootage depending on the ground, soil, or the like, the conventional tree supporting device is problematic in that the tree likely falls.

Meanwhile, in order to reduce damage to residential and farm land and the like caused by natural disasters such as tsunamis and typhoons or man-made disasters, the importance of the disaster damage preventing function of trees has regained awareness in recent years, and the demand exists for improving the rootage of trees.

Accordingly, an object of the present invention is to provide a treefall preventing device and a treefall preventing method capable of reliably preventing a planted tree from falling.

### Solution to Problem

The foregoing object of the present invention is achieved by a treefall preventing device to be buried in soil such that roots entwine the treefall preventing device as a planted tree grows, wherein the treefall preventing device comprises three or more supporting parts extending in parallel with each other and ring-like retaining bodies supported by the supporting parts, the retaining bodies are secured so as to be placed at intervals along the supporting parts, and the treefall preventing device further comprises spiral assisting bodies, which are in a spiral shape, disposed inside the retaining bodies.

In the treefall preventing device, the supporting parts are preferably formed of opposite sides of a plurality of U-shaped curved members.

The treefall preventing device preferably further comprises ring-like assisting bodies disposed inside the retaining bodies. The plurality of retaining bodies can be configured so as to have mutually different sizes.

Also, the foregoing object of the present invention is achieved by a treefall preventing method involving the treefall preventing device described above, the method comprising a burying step of burying the treefall preventing device in soil after securing the treefall preventing device to the ground by a pile member, and a planting step of planting a tree in a vicinity of the buried treefall preventing device.

### Advantageous Effects of Invention

The present invention can provide a treefall preventing device and a treefall preventing method capable of reliably preventing a planted tree from falling.

### Brief Description of Drawings

[FIG. 1] FIG. 1 is a side view of a treefall preventing device according to one embodiment of the present invention.
[FIG. 2] FIG. 2 is a plan view of the treefall preventing device shown in FIG. 1.
[FIG. 3] FIG. 3 shows schematic process diagrams of a treefall preventing method according to one embodiment of the present invention.
[FIG. 4] FIG. 4 is a schematic view of a tree supported by the treefall preventing method shown in FIG. 3.
[FIG. 5] FIG. 5 is a side view of a treefall preventing device according to another embodiment of the present invention.
[FIG. 6] FIG. 6 is a side view of the treefall preventing device shown in FIG. 5.
[FIG. 7] FIG. 7 is a side view of a treefall preventing device according to yet another embodiment of the present invention.
[FIG. 8] FIG. 8 is a schematic view for explaining a treefall preventing method according to another embodiment of the present invention.
[FIG. 9] FIG. 9 is a side view of a treefall preventing device according to yet another embodiment of the present invention.
[FIG. 10] FIG. 10 is a schematic view for explaining a treefall preventing method according to another embodiment of the present invention.
[FIG. 11] FIG. 11 is a schematic view for explaining a treefall preventing method according to another embodiment of the present invention.
[FIG. 12] FIG. 12 is a schematic view for explaining a treefall preventing method according to another embodiment of the present invention.

### Description of Embodiments

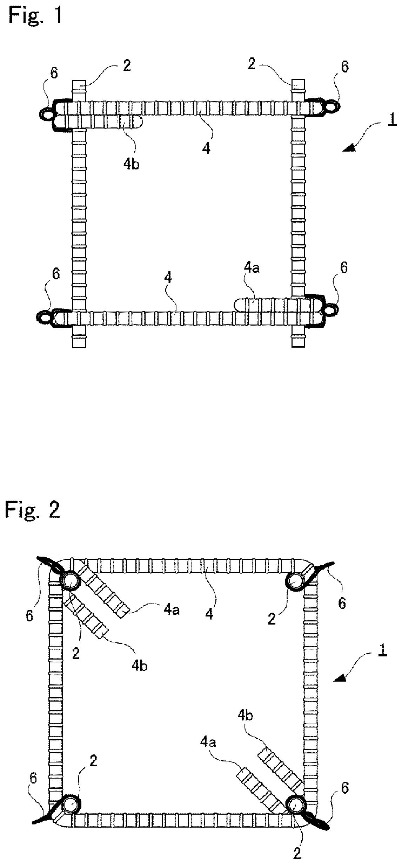

Below, an embodiment of the present invention will now be described with reference to the attached drawings. FIG. 1 is a side view of a treefall preventing device according to one embodiment of the present invention, and FIG. 2 is a plan view of the treefall preventing device shown in FIG. 1. As shown in FIGS. 1 and 2, the treefall preventing device 1 includes four vertical members 2 and two retaining bodies 4 supported by the vertical members 2, and is formed in a cubic shape as a whole.

The vertical members 2 are solid bar-like or hollow cylinder-like components made of metal, resin, or the like, and are straight reinforcing steel bars in the present embodiment. One longitudinal member 2 is disposed at each corner of a rectangle as viewed from above so as to extend in parallel with the other longitudinal members, and the entirety of the longitudinal members 2 in the longitudinal direction constitutes the supporting parts for supporting the retaining bodies 4. The surfaces of the vertical members 2 preferably have irregularities as in a ribbed or knurled reinforcing bar, thereby the surface area is increased, and adhesion to soil can be increased when the treefall preventing device is buried.

The retaining bodies 4 are ring-like components made of metal, resin, or the like. In the present embodiment, the retaining bodies 4 are formed by bending reinforcing bars into rectangular frames so as to surround the vertical members 2 along a plane perpendicular to the vertical members 2, and hook parts 4a, 4b at the opposite ends are engaged with the vertical members 2. As with the longitudinal members 2, the surfaces of the retaining bodies 4 preferably have irregularities.

Two retaining bodies 4, 4 are disposed in parallel with each other so as to be spaced apart along the longitudinal members 2, and are secured to the longitudinal members 2 by fasteners 6 such as a metal wire. The method for securing the retaining bodies 4 to the vertical members 2 is not particularly limited, and may be, for example, holding the retaining bodies with clamps, crimping metal pipes, welding, or the like.

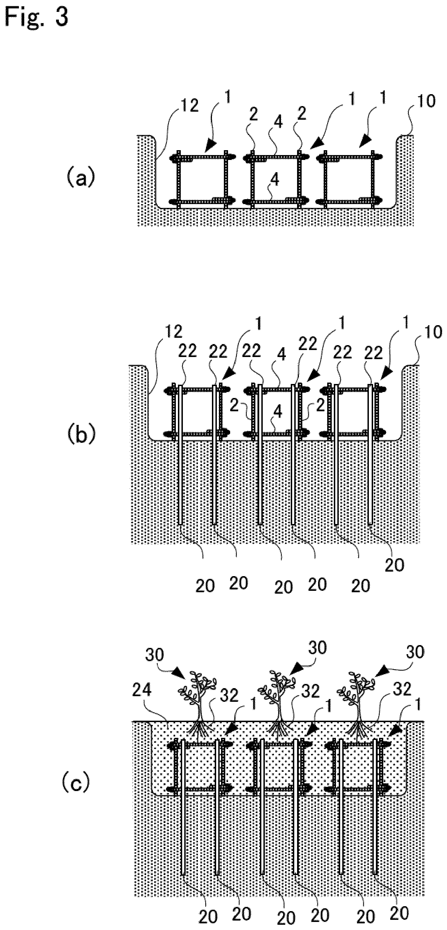

Next, a method for preventing a planted tree from falling, wherein the treefall preventing device 1 having the above-described configuration is used, will now be described. FIG. 3 shows schematic process diagrams for explaining a treefall preventing method for a planted tree according to one embodiment of the present invention. First, as shown in FIG. 3(a), ground 10 of a planting area is excavated to form a planting hole 12, and then the treefall preventing device 1 is disposed in the bottom part of the planting hole 12 such that the vertical members 2 are upright. When planting a large number of trees in a large planting area as in the case of a damage prevention plantation, it is preferable that a large planting hole 12 is formed accordingly, and a plurality of treefall preventing devices 1 are disposed so as to be adjacent to each other. The size of the treefall preventing device 1 is not particularly limited and, for example, may be cubic with each side having a length of about 1 m. When a plurality of treefall preventing devices 1 are disposed, the treefall preventing devices 1 may be in contact with each other. When a plurality of treefall preventing devices 1 are used, adjacent treefall preventing devices 1 are preferably connected to each other by a connecting member so as to be integrated into a single body. Thereby, a large area of the ground can be reliably strengthened by the plurality of treefall preventing devices 1 even before tree roots grow and engage with the treefall preventing devices 1 as will be described below. The connecting member is not particularly limited and, for example, an annealed wire having a diameter of 2.6 mm or greater can be suitably used.

Then, as shown in FIG. 3(b), a plurality of pile members 20 each having a hook-like engagement part 22 in the upper part are driven into the bottom part of the planting hole 12 to engage the respective engagement parts 22 with the retaining bodies 4 of the treefall preventing device 1, and thereby the treefall preventing device 1 is secured to the ground in the bottom part of the planting hole 12. The pile members 20 are each made of, for example, a reinforcing steel bar or the like, and are preferably driven into the soil as deep as, for example, about 0.5 to 2.5 m below the bottom part of the planting hole 12 so as to be capable of reliably securing the treefall preventing device 1.

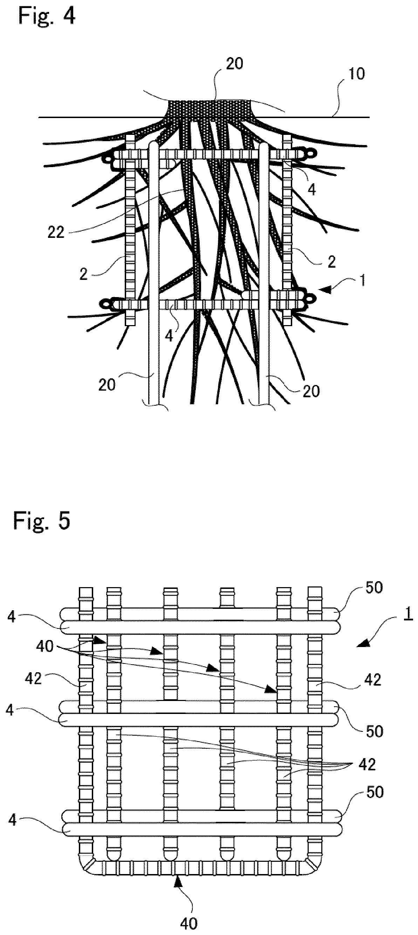

Next, as shown in FIG. 3(c), the treefall preventing device 1 is buried in soil 24 such as excavated soil or improved soil, and then a sapling of the tree 30 is planted above the treefall preventing device 1. As the planted tree 30 grows, roots 32 spread through the soil in search of water and nutrients and, thus, as shown in FIG. 4, it is possible to let the roots 32 of the tree 30 grow to the inside of the retaining body 4 of the treefall preventing device 1 and grow between the upper and lower retaining bodies 4, 4 to entwine the retaining body 4. In the present embodiment, when a plurality of treefall preventing devices 1 are disposed so as to be adjacent to each other, the roots of the tree 30 engage with not only the treefall preventing device 1 disposed immediately below but also the treefall preventing devices 1 adjacent thereto. The retaining bodies 4 are formed in a ring-like shape to have sufficient strength and, by being secured to and supported by the supporting parts 3, are capable of reliably retaining the roots that are engaged with the retaining bodies 4. While the tree 30 is preferably planted immediately above the treefall preventing device 1, the tree 30 may be planted in the vicinity of the treefall preventing device 1, and may be planted obliquely above or on either side of the treefall preventing device 1.

In this way, the treefall preventing device 1 is buried in the soil so as to engage with the roots of a sapling as it grows, thus mainly the distal end side of the root system of the tree 30 can be entwined with the treefall preventing device 1, and accordingly a large number of grown or branched roots (such as horizontal roots and vertical roots) can be retained by the treefall preventing device 1 to firmly support the tree 30 and reliably prevent the tree from falling. Moreover, even in the case of an earth-flow disaster, river erosion, or the like, soil is likely retained inside the treefall preventing device 1, thus the treefall preventing device 1 plays a role of strengthening the ground, and, for this reason as well, trees can be prevented from falling.

An excessively large depth from the ground 10 to the upper retaining body 4 of the treefall preventing device 1 makes it difficult for horizontal roots extending along the ground surface to be engaged with the retaining body 4 and, on the other hand, when the depth is excessively small, the treefall preventing device 1 is likely exposed due to soil surface erosion or the like. Accordingly, the depth is preferably about 30 cm, and preferably the treefall preventing device 1 is mostly disposed at a depth of about 30 to 130 cm. The kind of the tree 30 to be planted is not particularly limited, and the tree 30 is preferably a tree, the roots 32 of which are strong and spread greatly in the depth direction, e.g., broad-leaf trees such as Quercus myrsinifolia (bamboo-leaf oak), Castanopsis sieboldii (itajii chinkapin), Machilus thunbergii (Japanese bay tree), Camellia japonica (Japanese camelia), and Euonymus japonicus (Japanese spindle). The treefall preventing device 1 can be suitably used to prevent treefall in a damage prevention plantation such as a windbreak and a tidewater prevention plantation. When planting a plurality of trees 30, the same kind of trees 30 may be planted, whereas multiple kinds of trees 30 having different root systems are preferable. While a good reinforcing effect from the treefall preventing device 1 can be obtained even with only one tree 30, the use of a plurality of connected trees 30 enables the function as a disaster damage prevention plantation to be more reliably exhibited. The tree 30 to be planted is preferably a species that is native to the area. The kind of the tree 30 to be planted may be a needle-leaf tree such as cedar, cypress, and larch, and the treefall preventing device 1 is also usable in, for example, an artificial plantation where the same kind of trees are planted in large numbers.

One embodiment of the present invention has been described in detail above, but the specific aspects of the present invention are not limited to the above embodiment. For example, in the above-described embodiment, the treefall preventing device 1 is formed in a cubic shape as a whole, but the shape is not particularly limited, and when planting trees in a row, the treefall preventing device 1 may be in a rectangular parallelepiped shape elongated in the direction of the row.

While the number of the vertical members 2 constituting the supporting parts for supporting the retaining bodies 4 is four in the above-described embodiment, the number of the vertical members 2 may be three or greater as long as the ring-like retaining bodies 4 can be supported. For example, when the retaining bodies 4 have a polygonal shape having three or more sides, the longitudinal member 2 is preferably disposed at each vertex of the polygonal shape. When the retaining bodies 4 have a circular or elliptical shape, a suitable number of the vertical members 2 are preferably disposed at equal intervals in the circumferential direction of the retaining bodies 4.

In the above-described embodiment, disposing two retaining bodies 4 so as to be spaced apart along the vertical members 2 enables the roots 32 of the tree 30 to grow between the retaining bodies 4 and causes the respective retaining bodies 4 to be engaged with the roots extending at different depth positions, thus making it possible to reliably support the tree 30. There may be three or more retaining bodies 4, and it is preferable to suitably set the number and interval of the retaining bodies 4 in view of the thickness of the roots 32 the planted tree 30 will have, the depth to which the roots 32 will grow, and the like.

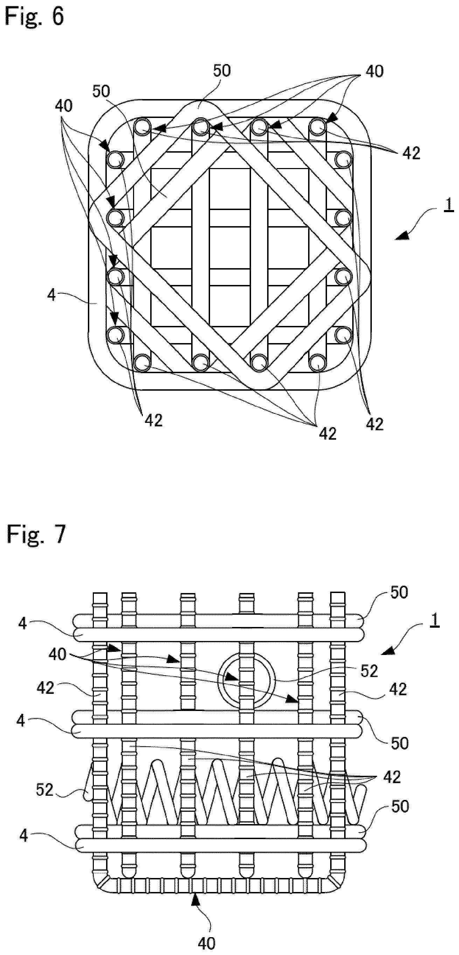

The supporting parts for supporting the retaining bodies 4 can also be formed from components other than the straight-bar vertical members 2 used in the above-described embodiment. For example, as shown in the side view and the plan view of FIGS. 5 and 6, respectively, the treefall preventing device 1 can also be configured such that the opposite-side portions extending in parallel with each other on the opposite sides of a U-shaped member 40 are used as supporting parts 42, 42. In the treefall preventing device 1 shown in FIGS. 5 and 6, four curved members 40 are disposed in parallel with each other at equal intervals, also other four curved members 40 are disposed in parallel with each other at equal intervals so as to be perpendicular to the aforementioned curved members 40, and thus sixteen supporting parts 42 are formed from the eight curved members 40. In this way, by configuring the opposite-side portions of a plurality of U-shaped curved members 40 to be the supporting parts 42, the strength of the fall tree preventing device 1 is ensured, and a tree can be more reliably supported. The curved members 40 each may be a part of a component formed into a frame shape.

Each supporting part 42 supports three retaining bodies 4 that are each made of a ring-like component having a square shape as viewed from above. An assisting body 50 is supported on top of each retaining body 4. The assisting body 50 is made of a ring-like body having a rectangular shape as viewed from above, and the area of opening within the ring of the assisting body 50 is formed smaller than the area of opening within the ring of the retaining body 4 such that the assisting body 50 is disposed inside the retaining body 4 (that is, the assisting body 50 does not protrude outward beyond the retaining body 4 as viewed from above). The assisting body 50 is secured to both the supporting part 42 and the retaining body 4 using a fastener (not shown in FIGS. 5 and 6) as in the configuration shown in FIG. 1 or the like.

The treefall preventing device 1 shown in FIGS. 5 and 6 has assisting bodies 50 in addition to the retaining bodies 4, thus the roots of a growing tree easily entwine the treefall preventing device 1, and the device can more reliably support the tree. The vertically adjacent assisting bodies 50 have different rectangular orientations when viewed from above, thereby making it easy to support the roots of a tree by the upper and lower assisting bodies 50. When the treefall preventing device 1 has an increased size, the number of the assisting bodies 50 disposed above and below the retaining bodies 4 may be increased, thus the density of the treefall preventing device 1 and also the area of contact with soil are increased, thereby making it possible to increase the effect of reinforcing the ground and preventing treefall can be increased. The assisting bodies may have a spiral shape other than a ring-like shape, and, as shown in FIG. 7, the treefall preventing device 1 can also be configured such that the ring-like assisting bodies 50 and spiral assisting bodies 52 are disposed inside the retaining bodies 4 (that is, the entirety of or a principal part thereof does not protrude outward beyond the retaining bodies 4 as viewed from above).

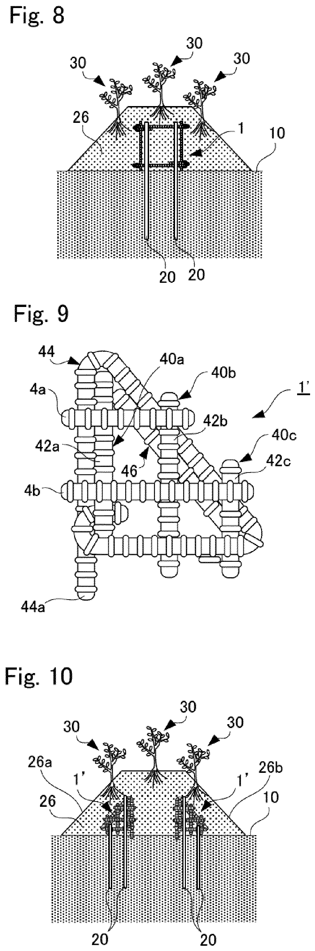

The place where the treefall preventing device 1 of the present embodiment is installed is not limited to the ground in the bottom part of the planting hole 12 shown in FIG. 3, and may be the ground surface (the ground line (GL)) or the like. For example, it is possible as shown in FIG. 8 that the treefall preventing device 1 shown in FIG. 1 or the like is secured to the ground surface (the ground) 10 by pile members 20, an embankment 26 is formed to bury the treefall preventing device 1 in the soil, and then the trees 30 are planted above as well as right and left to the treefall preventing device 1. Such a treefall preventing method can be simultaneously performed when, for example, performing ground leveling work, river bank protection work, and living ground development work.

When burying the treefall preventing device of the present invention in the slope of an embankment, a treefall preventing device 1' configured as shown in FIG. 9 can be suitably used. In the treefall preventing device 1', two retaining bodies 4a, 4b each having the shape of a rectangular frame and having a mutually different size are disposed in parallel with each other so as to be spaced apart in the vertical direction, and are supported by supporting parts 42a, 42b, 42c of three frame members 40a, 40b, 40c perpendicular to the retaining bodies 4a, 4b. Moreover, a triangular ring-like assisting body 44 and a rectangular ring-like assisting body 46 are placed inside the two retaining bodies 4a, 4b so as to support them from inside. The triangular ring-like assisting body 44 is formed in the shape of a right triangle, and is disposed so as to be perpendicular to both the retaining bodies 4a, 4b and the frame members 40a, 40b, 40c. Also, the rectangular ring-like assisting body 46 is disposed so as to be inclined relative to the retaining bodies 4a, 4b. The triangular ring-like assisting body 44 has an inserting part 44a that protrudes downward, and when securing the treefall preventing device 1' to the ground, the inserting part 44a is inserted into the ground to stabilize the orientation of the treefall preventing device 1', thereby facilitating the subsequent securing of the treefall preventing device 1' by driving the pile members 20.

In the treefall preventing device 1' shown in FIG. 9, the retaining bodies 4a, 4b mutually have different sizes and thus, as shown in FIG. 10, when burying the treefall preventing device 1' in the embankment 26 after the treefall preventing device 1' is secured to the ground surface (the ground) by the pile members 20 such that the smaller retaining body 4a is on the upper side, the retaining bodies 4a, 4b can be easily disposed along the slopes 26a, 26b of the embankment 26, thus the embankment 26 can be strengthened, and also the trees 30 planted in the slopes 26a, 26b can be reliably prevented from falling. While the treefall preventing device 1' has two retaining bodies 4a, 4b in the present embodiment, three or more retaining bodies that have different sizes in a stepwise manner may be provided.

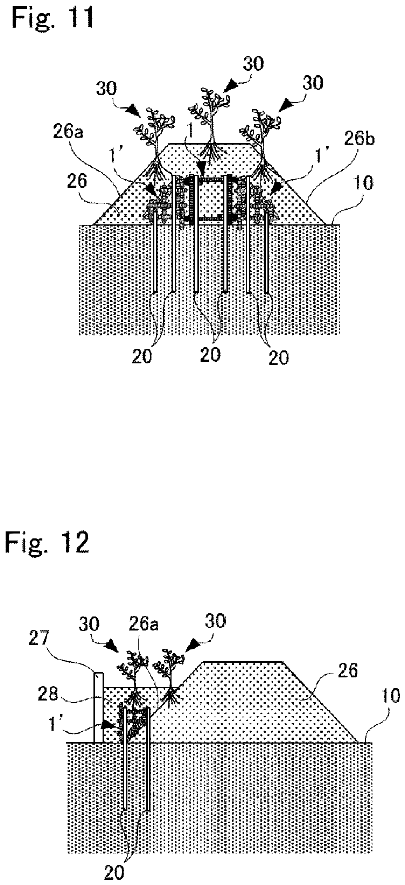

While the treefall preventing devices 1' shown in FIG. 10 are respectively disposed in the right and left slopes 26a, 26b of the embankment 26, only one treefall preventing device 1' may be disposed in either slope. Moreover, the treefall preventing device 1' shown in FIG. 9 can be used as shown in, for example, FIG. 11 by suitably connecting it with the treefall preventing device 1 shown in FIG. 1 or the like.

The treefall preventing device 1' shown in FIG. 9 can be buried between the embankment 26 and an earth retaining wall 27 as shown in FIG. 12. That is, the treefall preventing device 1' having a shape obtained by inverting the treefall preventing device 1' shown in FIG. 9 upside down is disposed along the slope 26a of the embankment 26 and secured to the ground 10 by the pile members 20, and then the treefall preventing device 1' is buried in supplementary soil 28 supplied between the slope 26a and the earth retaining wall 27. Then, the trees 30 are planted in the vicinity of the treefall preventing device 1'. The treefall preventing method shown in FIG. 12 is capable of reliably preventing landslides by reinforcing the embankment 26.

### Reference Signs List

- 1: Treefall preventing device
- 2: Vertical member (Supporting part)
- 4: Retaining body
- 30: Tree
- 32: Root
- 40: Curved member
- 42: Supporting part
- 44, 46: Assisting body
- 50, 52: Assisting body

## Claims

1. A treefall preventing device (1) to be buried in soil such that roots (32) entwine the treefall preventing device (1) as a planted tree grows, wherein
the treefall preventing device (1) comprises three or more supporting parts (42) extending in parallel with each other and ring-like retaining bodies (4) supported by the supporting parts (42), and
the retaining bodies (4) are secured so as to be placed at intervals along the supporting parts (42), **characterized in that**
the treefall preventing device (1) further comprises spiral assisting bodies (52), which are in a spiral shape, disposed inside the retaining bodies (4).

2. The treefall preventing device (1) according to claim 1, wherein the supporting parts (42) are formed of opposite-side portions of a plurality of U-shaped curved members (40).

3. The treefall preventing device (1) according to claim 1 or 2, further comprising ring-like assisting bodies (44) disposed inside the retaining bodies (4).

4. The treefall preventing device (1) according to any one of claims 1 to 3, wherein the plurality of retaining bodies (4) have mutually different sizes.

5. A treefall preventing method involving the treefall preventing device (1) according to any one of claims 1 to 4, the method comprising:
a burying step of burying the treefall preventing device (1) in soil after securing the treefall preventing device (1) to the ground by a pile member; and
a planting step of planting a tree in a vicinity of the buried treefall preventing device (1).

## Patentansprüche

1. Baumfallverhinderungsvorrichtung (1), dazu bestimmt, derart in die Erde eingegraben zu werden, dass die Baumfallverhinderungsvorrichtung (1) im Verlauf des Wachstums eines gepflanzten Baums von Wurzeln (32) umwunden wird, wobei
die Baumfallverhinderungsvorrichtung (1) drei oder mehr stützende Teile (42), die sich parallel zueinander erstrecken, sowie ringartige rückhaltende Körper (4) umfasst, die von den stützenden Teilen (42) getragen werden und
die rückhaltenden Körper (4) derart befestigt sind, dass sie sich in Abständen entlang der stützenden Teile (42) befinden, **dadurch gekennzeichnet, dass** die Baumfallverhinderungsvorrichtung (1) des Weiteren spiralförmige Körper (52) umfasst, die im Inneren der rückhaltenden Körper (4) angeordnet ist.

2. Baumfallverhinderungsvorrichtung (1) nach Anspruch 1, wobei die stützenden Teile (42) aus sich gegenüberliegenden Abschnitten einer Mehrzahl von U-förmigen gekrümmten Gliedern (40) gebildet sind.

3. Baumfallverhinderungsvorrichtung (1) nach Anspruch 1 oder 2, des Weiteren umfassend ringartige Hilfskörper (44), die im Inneren der rückhaltenden Körper (4) angeordnet sind.

4. Baumfallverhinderungsvorrichtung (1) nach einem der Ansprüche 1 bis 3, wobei die Mehrzahl an rückhaltenden Körpern (4) jeweils voneinander unterschiedliche Größen aufweisen.

5. Baumfallverhinderungsverfahren, unter Mitwirkung der Baumfallverhinderungsvorrichtung (1) nach einem der Ansprüche 1 bis 4, wobei das Verfahren Folgendes umfasst:
einen Schritt des Eingrabens der Baumfallverhinderungsvorrichtung (1) in die Erde, nachdem die Baumfallverhinderungsvorrichtung (1) mittels eines Pfahlglieds im Boden befestigt wurde; und
einen Schritt des Pflanzens eines Baumes in der Nähe der eingegrabenen Baumfallverhinderungsvorrichtung (1).

## Revendications

1. Outil de prévention de la chute d'arbre (1) destiné à être enterré dans le sol de façon ce que des racines (32) entrelacent l'outil de prévention de la chute d'arbre (1) à mesure qu'un arbre planté croît, dans lequel
l'outil de prévention de la chute d'arbre (1) comprend trois parties de support ou plus (42) s'étendant parallèlement l'une à l'autre et des corps de fixation de type anneau (4) supportés par les parties de support (42), et
les corps de fixation (4) sont fixés de manière à être placés à intervalles le long des parties de support (42), **caractérisé en ce que**
l'outil de prévention de la chute d'arbre (1) comprend en outre des corps d'assistance hélicoïdaux (52),
qui sont de forme hélicoïdale, disposés à l'intérieur des corps de fixation (4).

2. Outil de prévention de la chute d'arbre (1) selon la revendication 1, dans lequel les parties de support (42) sont formées de parties de côté opposé d'une pluralité de membres incurvés en forme de U (40).

3. Outil de prévention de la chute d'arbre (1) selon la revendication 1 ou 2, comprenant en outre des corps d'assistance de type anneau (44) disposés à l'intérieur des corps de fixation (4).

4. Outil de prévention de la chute d'arbre (1) selon l'une quelconque des revendications 1 à 3, dans lequel la pluralité de corps de fixation (4) ont des tailles mutuellement différentes.

5. Procédé de prévention de la chute d'arbre impliquant l'outil de prévention de la chute d'arbre (1) selon l'une quelconque des revendications 1 à 4, le procédé comprenant :
une étape d'enterrement consistant à enterrer l'outil de prévention de la chute d'arbre (1) dans le sol après avoir sécurisé l'outil de prévention de la chute d'arbre (1) au sol par un élément de pilier ; et
une étape de plantation consistant à planter un arbre à proximité de l'outil de prévention de la chute d'arbre (1) enterré.
